# NEUE EUROPÄISCHE PATENTSCHRIFT

(11) **EP 1 525 072 B2**
(45) Veröffentlichungstag und Bekanntmachung des Hinweises auf die Entscheidung über den Einspruch: **28.09.2011**
(45) Hinweis auf die Patenterteilung: 04.04.2007
(21) Anmeldenummer: 03767733.3
(22) Anmeldetag: 03.12.2003
(51) Int. Cl.: B23Q 17/22, B23Q 17/24, B23P 11/02, B23B 31/02

(54) **VERFAHREN ZUM BEFESTIGEN EINES WERKZEUGS IN EINER BESTIMMTEN AXIALEN POSITION**
METHOD FOR FIXING A TOOL IN A DEFINED AXIAL POSITION
PROCEDE DE FIXATION D'UN OUTIL DANS UNE POSITION AXIALE DEFINIE

(30) Priorität: 07.12.2002 DE 10257226
(43) Veröffentlichungstag der Anmeldung: 27.04.2005
(73) Patentinhaber: E. Zoller Gmbh & Co. KG Einstell-und Messgeräte, 71691 Freiberg/Neckar (DE)
(72) Erfinder: PFAU, Christian, 74321 Bietigheim-Bissingen (DE)
(74) Vertreter: Daub, Thomas
(86) Internationale Anmeldenummer: PCT/EP2003/013651
(87) Internationale Veröffentlichungsnummer: WO 2004/052593

(56) Entgegenhaltungen:
- EP-A- 1 103 338
- EP-A1- 1 155 765
- WO-A-03/106105
- WO-A1-99/07505
- DE-A- 10 138 107
- DE-A- 19 836 912
- DE-A- 19 927 496
- DE-A1- 10 015 322
- US-A- 5 035 556
- OFFENKUNDIGE VORBENUTZUNG "KELCH-SCHRUMPFTECHNIK"-HEISSLUFT"
- OFFENKUNDIGE VORBENUTZUNG "KELCH-SCHRUMPFTECHNIK-INDUKTION"
- PROSPEKT "KELCH WERKZEUGAUFNAHMEN SK30-40-49-50"

## Beschreibung

### Stand der Technik

Die Erfindung betrifft ein Verfahren zum Befestigen eines Werkzeugs nach dem Oberbegriff von Anspruch 1, wie es mit einer Vorrichtung aus dem Prospekt "Die Kelch-Schrumpftechnik- für beste Werkzeug-Verbindungen" der Kelch GmbH + Co, Schorndorf, vom August 1997 durchführbar ist.

Aus der DE 100 24 423 A1 ist ein Verfahren zum kraftschlüssigen Einspannen eines Werkzeugs mit seinem Schaft in einem Werkzeugfutter bekannt, bei dem das Werkzeug entgegen einer Gegenkraft in das Werkzeugfutter eingedrückt und bei Erreichen einer axialen Sollposition im Werkzeugfutter durch Einschrumpfen kraftschlüssig fixiert wird. Die Sollposition wird durch einen Anschlag vorgegeben, an den ein Arm, der das Werkzeug beim Einführen in das Werkzeugfutter hält, anschlägt. Die Position des Anschlags und des Arms wird nach einer Vermessung des Werkzeugs auf seine relative Position zum Werkzeugfutter hin eingestellt.

Es ist die Aufgabe der vorliegenden Erfindung ein Verfahren zum Befestigen eines Werkzeugs anzugeben, bei dem das Werkzeug sehr schnell mit einer sehr hohen Genauigkeit in einer gewünschten axialen Sollposition im Werkzeugfutter fixiert werden kann. Diese Aufgabe wird durch die Merkmale des Patentanspruchs 1 gelöst. Weitere Ausgestaltungen der Erfindung ergeben sich aus den Unteransprüchen.

### Vorteile der Erfindung

Die Erfindung nach Anspruch 1 ermöglicht eine sehr genaue Positionierung des Werkzeugs in einer gewünschten axialen Sollposition im Werkzeugfutter, da mit dem Anschlag verbundene Fehlerquellen vermieden werden können. Bei der Bestimmung der Sollposition des Anschlags wird die Position des Anschlags vor dem Bewegen des Anschlags berücksichtigt. Das Werkzeug kann im am Anschlag anliegenden Zustand vermessen und anschließend in die Sollposition verfahren werden. Die abschließende Ist-Position ist somit unabhängig von mechanischen Fehlerquellen, wie beispielsweise einem vor dem Einführen nicht exakt eingestellten Anschlag, einer verschmutzten Anschlagfläche oder einem nicht exakten Aufsitzen des Werkzeugs auf dem Anschlag. Beispielsweise zwischen dem Anschlag und einem Werkzeug befindlicher Schmutz führt zu einer "Fehlpositionierung", die sowohl in die Vermessung des charakteristischen Elements als auch in die Positionierung des Werkzeugs in die axiale Sollposition eingeht. Der Fehler hebt sich heraus und die Sollposition des Werkzeugs im Werkzeugfutter ist unabhängig von der Qualität der Verbindung zwischen Anschlag und Werkzeug. Die Positionierung des Werkzeugs auf die axiale Sollposition kann in der Weise erfolgen, dass das charakteristische Element des Werkzeugs in einen Soll-Abstand zu einem Bezugspunkt positioniert wird.

Die Positionierung des Werkzeugs auf die axiale Sollposition wird durch eine Bewegung des Anschlags um eine aus der Messung errechnete Positionierstrecke durchgeführt. Das Werkzeug wird somit durch die Bewegung des Anschlags in Sollposition geführt. Der Anschlag gibt mit seiner Bewegung die Bewegung des Werkzeugs vor. Als Schaft des Werkzeugs wird der Bereich des Werkzeugs verstanden, der in das Werkzeugfutter eingeführt wird. Gegenüber der Spitze des Werkzeugs ist der Schaft unempfindlich gegen einen Anschlag, weshalb dort ein Anschlag ohne Probleme angeschlagen werden kann.

Vorteilhafterweise wird das Werkzeug zuerst in das Werkzeugfutter eingeführt, zweckmäßigerweise direkt in eine Aufnahmebohrung, in der das Werkzeug später fixiert wird, und nach dem Einführen an den Anschlag gebracht. Hierdurch kann einem späteren Loslösen des Werkzeugs vom Anschlag, beispielsweise durch ein Anstoßen des Werkzeugs am Werkzeugfutter, entgegengewirkt werden. Außerdem wird ein manuelles Einbringen des Werkzeugs in das Werkzeugfutter erleichtert, da das Werkzeug in eine Aufnahmebohrung des Werkzeugfutters eingegeben werden kann.

Das Bringen des Werkzeugs in Anschlag kann durch eine Bewegung des Werkzeugs an den ruhenden Anschlag oder eine Bewegung des Anschlags an das ruhende Werkzeug oder auch durch ein Aufeinanderzubewegen von Werkzeug und Anschlag erfolgen.

Zweckmäßigerweise wird das Werkzeug von der Gravitation gegen den Anschlag gedrückt. Das Werkzeug wird von seinem Gewicht gegen den unterhalb des Werkzeugs angeordneten Anschlag angepresst, so dass die Verbindung zwischen Werkzeug und Anschlag auch bei einer Bewegung des Anschlags erhalten bleibt. Auf eine zusätzliche Halterung zur Positionierung des Werkzeugs am Anschlag kann verzichtet werden.

In vorteilhafter Ausgestaltung der Erfindung wird das Werkzeug durch die Bewegung des Anschlags aus dem Werkzeugfutter herausbewegt. Die Bewegung des Anschlags ist gegen die Richtung gerichtet, in die das Werkzeug in das Werkzeugfutter eingeführt wurde, und ist gegebenenfalls auch gegen die Gravitation gerichtet, die das Werkzeug gegen den Anschlag drückt. Ein Lösen des Werkzeugs vom Anschlag, beispielsweise durch eine Verklemmung des Werkzeugs im Werkzeugfutter, kann somit wirksam vermieden werden.

Vorteilhafterweise wird der Ist-Abstand des charakteristischen Elements von einem Bezugspunkt bestimmt, und die Positionierstrecke wird aus der Differenz zwischen dem Ist-Abstand und einem Soll-Abstand berechnet. Der Bezugspunkt kann als Koordinatenursprung für Messungen und die Positionierung verwendet werden. Durch die Differenzbildung zwischen dem Ist-Abstand und dem Soll-Abstand des charakteristischen Elements vom Bezugspunkt kann die Positionierstrecke auf einfache Weise bestimmt werden.

Eine Werkzeugschneide ist für einen späteren Bearbeitungsvorgang ein maßgebliches Element des Werkzeugs. Daher dient eine Werkzeugschneide zweckmäßigerweise als charakteristisches Element des Werkzeugs. Es kann auch nur eine Kontureinheit, beispielsweise eine Spitze der Schneide, als charakteristisches Element verwendet werden.

Eine besonders stabile Halterung des Werkzeugs im Werkzeugfutter wird erreicht, wenn ein im Werkzeugfutter abgestützter Halteanschlag an das in Sollposition gebrachte Werkzeug in Anschlag gebracht wird. Das Werkzeug bearbeitet bei einem späteren Fertigungsvorgang ein Werkstück und ist hierbei großen Kräften ausgesetzt. Diese Kräfte drücken das Werkzeug unter anderem in das Werkzeugfutter hinein. Durch einen im Werkzeugfutter abgestützten Halteanschlag, der auch während des Fertigungsvorgangs am Werkzeug anliegt, wird das Werkzeug in axialer Richtung vom Halteanschlag im Werkzeugfutter gestützt gehalten. Zur Abstützung des Halteanschlags im Werkzeugfutter kann sowohl der Halteanschlag als auch das Werkzeugfutter mit jeweils einem Gewinde versehen sein, durch deren Verbindung der Halteanschlag im Werkzeugfutter gehalten wird. Der Halteanschlag ist beispielsweise in einer Aufnahmebohrung des Werkzeugfutters für das Werkzeug angeordnet. Es ist auch möglich, den Halteanschlag in einer eigens für den Halteanschlag vorgesehenen Bohrung anzuordnen. Zum Anschlagen des Anschlags an das Werkzeug kann das Werkzeug zuerst in seine Sollposition gebracht und dort fixiert und anschließend der Halteanschlag auf eine leichte Berührung mit dem Werkzeug eingestellt werden. Die Einstellung kann manuell geschehen, beispielsweise durch einen Inbus, durch den der zweite Anschlag in einem Gewinde gedreht wird. Es ist auch möglich, die Einstellung des Halteanschlags maschinell oder sogar automatisch vorzunehmen.

Ein Werkzeugfutter zur Durchführung einer Ausführungsform des oben genannten Verfahrens weist eine Werkzeugaufnahmebohrung und eine mit der Werkzeugaufnahmebohrung kommunizierende Anschlagbohrung zur Durchführung eines translatorisch bewegbaren ersten Anschlags auf. Das Werkzeugfutter umfasst eine Stützeinrichtung, an der ein Halteanschlag abgestützt ist, wobei der Halteanschlag einen Kanal zur Durchführung des Anschlags aufweist. Mit einem solchen Werkzeugfutter kann eine sehr genaue und schnelle und insbesondere auch vollautomatische Positionierung des Werkzeugs im Werkzeugfutter erreicht werden, wobei das Werkzeug durch den Halteanschlag in besonderem Maße an einem Verschieben innerhalb des Werkzeugfutters gehindert wird. Als Stützeinrichtung kann ein Innengewinde Verwendung finden.

Zweckmäßigerweise wird das Werkzeug nach Erreichen der Sollposition im Werkzeugfutter eingeschrumpft. Dies gewährleistet eine feste kraftschlüssige Verbindung zwischen dem Werkzeug und dem Werkzeugfutter.

Eine hochgenaue Einstellung des Werkzeugs auf eine axiale Sollposition bei gleichzeitiger fester Halterung im Werkzeugfutter wird erreicht, indem das Werkzeug eingeführt, vorpositioniert und in das Werkzeugfutter eingeschrumpft wird und vor der Bewegung des Anschlags um die Positionierstrecke wieder gelockert wird. Beim Einschrumpfen des Werkzeugs in einem Schrumpffutter steht nur wenig Zeit zur Verfügung, in der das Werkzeug zuverlässig im Werkzeugfutter bewegt werden kann. Da das Vermessen des charakteristischen Elements bei im Werkzeugfutter befindlichem Werkzeug stattfindet, kann dies entweder mit einer schnellen Vermessungseinrichtung im heißen Werkzeugfutter oder auch mit einem langsameren Messvorgang bei bereits abgekühltem Werkzeugfutter geschehen. Die Positionierung in Sollposition kann dann vorgenommen werden, indem das Werkzeugfutter nach der Vermessung erneut erhitzt wird, so dass es sich ausdehnt und das Werkzeug am Anschlag anliegend wieder gelockert wird. Der Anschlag wird dann um die Positionierstrecke bewegt, so dass das Werkzeug in die axiale Sollposition gebracht wird. Anschließend wird das Werkzeugfutter wieder abgekühlt, so dass es sich zusammenzieht und das Werkzeug im Werkzeugfutter fest eingeschrumpft hält. Eine nicht zur Erfindung gehörende Vorpositionierung des Werkzeugs im Werkzeugfutter kann durchgeführt werden, indem das Werkzeug beispielsweise außerhalb des Werkzeugfutters vermessen, dann in das heiße Werkzeugfutter bis zu einer errechneten Vorposition eingeführt und anschließend durch Abkühlung des Werkzeugfutters eingeschrumpft wird. Die Vorpositionierung im Werkzeugfutter kann durch den Anschlag oder ein anderes Hilfsmittel geschehen. Das Werkzeug wird dann nochmals vermessen, wobei die aus der zweiten Messung erhaltenen Messwerte zum Errechnen der Positionierstrecke dienen. Bei diesem Messvorgang muss der Anschlag nicht zwingend am Werkzeug anliegen.

Eine besonders zügige Vorpositionierung des Werkzeugs im erhitzten Werkzeugfutter wird erreicht, indem das charakteristische Element vor dem Einführen des Werkzeugs auf seine Position relativ zu einem Anschlagpunkt am Werkzeug vermessen wird und der Anschlag um eine aus der Messung errechnete Vorpositionierungsstrecke verfahren wird, bevor das Werkzeug in Anschlag gebracht wird. Das Werkzeug kann hierbei in einer vom Werkzeugfutter unabhängigen Vermessungseinrichtung an einen Vermessungsanschlag gebracht werden, wobei dann die, insbesondere axiale Entfernung des charakteristischen Elements zu dem Vermessungsanschlag oder zu einem Bezugspunkt ermittelt wird. Aus dieser Entfernung und der bekannten axialen Sollposition im Werkzeugfutter kann auf einfache Weise die Stellung des Anschlags im Werkzeugfutter errechnet werden, die zu einer Positionierung des Werkzeugs in der axialen Sollposition führt. Der Anschlag kann von beispielsweise einer Grundstellung um die Vorpositionierungsstrecke in die Vorpositionsstellung verfahren werden, wobei das Werkzeug den Anschlag noch nicht berührt, sondern noch außerhalb des Werkzeugfutters gehaltert ist. Auf diese Weise findet die Messung zur Vorpositionierung außerhalb des Futters statt, so dass die spätere Positionierung sehr schnell und sehr exakt im aufgeheizten Werkzeugfutter stattfinden kann.

Soll das charakteristische Element im erhitzten Werkzeugfutter vermessen werden, muss die Vermessung schnell ausgeführt werden. Eine schnelle Vermessung wird erfindungsgemäß erreicht, wenn das Werkzeug schon vor dem Einführen vor eine Vermessungsoptik gebracht und die Vermessungsoptik auf das charakteristische Element fokussiert wird. Es kann auf diese Weise Zeit beim späteren Fokussieren eingespart werden.

Zweckmäßigerweise wird das Werkzeug in der Weise bewegt, dass die Vermessungsoptik auf das charakteristische Element fokussieren kann. Das Werkzeug wird hierbei beispielsweise gedreht, bis das charakteristische Element möglichst gut vor der Vermessungsoptik zu liegen kommt. Eine schnelle und exakte Messung kann hierdurch gewährleistet werden.

Nochmals beschleunigt wird die Messung, indem erfindungsgemäß die Vermessungsoptik während des Einführens auf das charakteristische Element fokussiert bleibt. Die Vermessungsoptik wird während des Einführvorgangs der Bewegung des charakteristischen Elements nachgeführt und ist bereits auf das charakteristische Element fokussiert, wenn das Werkzeug am Anschlag anschlägt. In diesem Zustand kann die Messung sehr schnell und exakt durchgeführt werden.

Vorteilhafterweise wird ein Anschlagen des Werkzeugs am Anschlag durch eine Auswerteeinheit registriert und darauf die Positionsbestimmung des charakteristischen Elements getriggert. In dem Moment, in dem das Werkzeug am Anschlag zum Anliegen kommt, kann die Positionsbestimmung des charakteristischen Elements beginnen. Bei einer Registrierung des Anschlagens, beispielsweise durch einen Sensor, und einer anschließenden Triggerung der Positionsbestimmung ist eine sehr schnelle Durchführung der Messung möglich.

Eine zuverlässige Registrierung des Anschlagens des Werkzeugs am Anschlag kann erreicht werden, wenn die Registrierung mit Hilfe der Vermessungsoptik erfolgt. Es werden keine zusätzlichen Bauteile, wie beispielsweise ein Sensor, benötigt. Die Registrierung kann dadurch erreicht werden, dass die Position des charakteristischen Elements in einem Bildausschnitt während des Einführens verfolgt wird und die Position des charakteristischen Elements im Bildausschnitt auf eine vorbestimmte Verschiebung überwacht wird.

In einer weiteren Ausgestaltung der Erfindung wird die Fixierung des Werkzeugs im Werkzeugfutter gelöst und der Anschlag bewegt das Werkzeug in Richtung aus dem Werkzeugfutter heraus. Ein im Werkzeugfutter fixiertes Werkzeug wird in einem Bearbeitungsvorgang an einem Werkstück starken mechanischen Beanspruchungen unterworfen. Hierbei kann das Werkzeug durch Abnutzung, Beschädigung oder einem Abbrechen von Teilen des Werkzeugs verkürzt werden. Ein verkürztes Werkzeug ist unter Umständen nur schwer oder gar nicht mehr aus dem Werkzeugfutter herausnehmbar. Bei einem Herausschieben des Werkzeugs durch den Anschlag schaut ein Teil des Werkzeugs aus dem Werkzeugfutter heraus. Zumindest dieser Teil des Werkzeugs kann gegriffen werden, so dass das Werkzeug aus dem Werkzeugfutter entnehmbar ist. Es wird eine zuverlässige Entnehmbarkeit des Werkzeugs aus dem Werkzeugfutter erreicht.

In einer zweckmäßigen Ausgestaltung der Erfindung bewegt der Anschlag das Werkzeug bis zu einer vorbestimmten Position des Anschlags aus dem Werkzeugfutter heraus. Diese Position ist vorteilhafterweise so gewählt, dass das Werkzeug soweit aus dem Werkzeugfutter herausragt, dass es gut entnehmbar ist und das Werkzeug gleichzeitig noch einen genügenden Halt im Werkzeugfutter erfährt, dass es nicht selbständig aus dem Werkzeugfutter herausfällt. Ein zuverlässiges und fehlerfreies Entnehmen des Werkzeugs aus dem Werkzeugfutter kann gewährleistet werden.

### Zeichnung

In der Zeichnung ist ein Ausführungsbeispiel einer Vorrichtung zur Durchführung des erfindungsgemäßen Verfahrens dargestellt.

Es zeigen:
- Fig. 1: eine schematische Darstellung eines Werkzeugeinstell- und Messgeräts mit einem Werkzeugfutter,
- Fig. 2: einen Schnitt durch ein Werkzeugfutter mit einem beweglichen Anschlag in schematischer Darstellung und
- Fig. 3: einen ebenfalls schematisch dargestellten Schnitt durch ein anderes Werkzeugfutter mit einem beweglichen Anschlag, welches nicht zur Ausführung der Erfindung gehört.

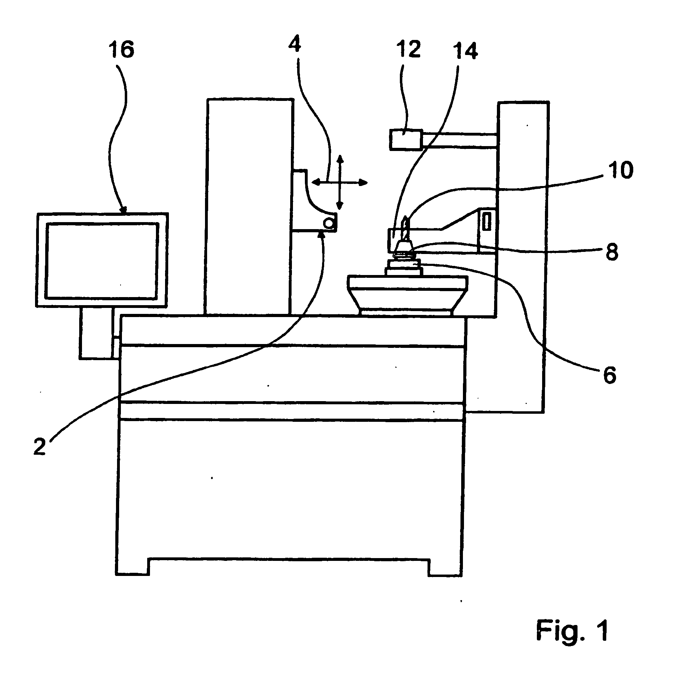

Das in Figur 1 dargestellte Werkzeugeinstell- und Messgerät weist eine Vermessungsoptik 2 zum optischen Vermessen von Werkzeugparametern auf. Die Vermessungsoptik 2 ist in die durch die Pfeile angezeigten Richtungen 4 verfahrbar. Das Werkzeugeinstell- und Messgerät umfasst außerdem eine drehbar ausgestaltete Werkzeugfutteraufnahme 6 zur Aufnahme eines Werkzeugfutters 8, das als Schrumpffutter oder als andersartiges Werkzeugfutter ausgestaltet sein kann. In das Werkzeugfutter 8 ist ein Werkzeug 10 eingesetzt. Das Werkzeugeinstell- und Messgerät weist ferner eine Heizeinrichtung 12 auf, mit der das Werkzeugfutter 8 erhitzt werden kann. Des Weiteren ist noch ein Greifelement 14 vorhanden, das zum vollautomatischen Einbringen des Werkzeugs 10 in das Werkzeugfutter 8 ausgelegt ist. Mit einem Datenverarbeitungssystem 16 sind von der Vermessungsoptik 2 ermittelte Messwerte, wie beispielsweise die Position einer Werkzeugschneide, abspeicherbar und abrufbar.

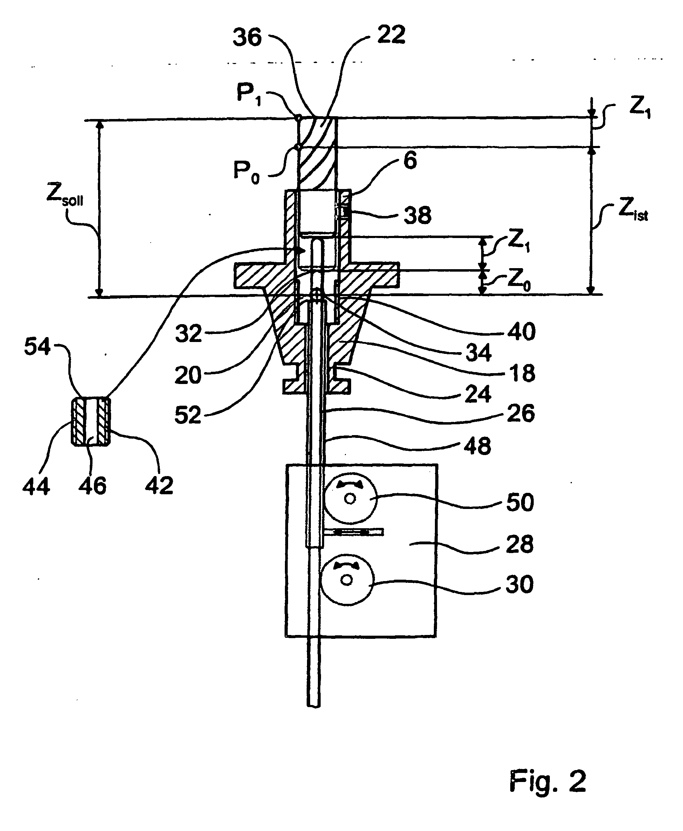

Figur 2 zeigt einen Schnitt durch ein Werkzeugfutter 18 zum Einsetzen in die Werkzeugaufnahme 6 aus Figur 1. Das Werkzeugfutter 18 weist eine Aufnahmebohrung 20 auf, in die ein Werkzeug 22 eingebracht werden kann. Unterhalb der Aufnahmebohrung 20 ist eine Anschlagbohrung 24, durch die ein beweglicher Anschlag 26 durchgeführt ist. Der Anschlag 26 ist in einer Nachstelleinheit 28 mit einem Nachstellantrieb 30 gehaltert. Der Anschlag 26 ist durch den Nachstellantrieb 30 auf und ab verfahrbar.

Zum Befestigen des Werkzeugs 22, das als ein Schaftwerkzeug ausgestaltet ist, im Werkzeugfutter 18 wird der Anschlag 26 in eine Grundposition gebracht. In der Grundposition ist die Spitze 32 des Anschlags 26 im Abstand Z₀ von einem Bezugspunkt 34 positioniert. Der Bezugspunkt 34 kann auf dem Werkzeugfutter 18 als ein Punkt markiert sein, der durch die Vermessungsoptik 2 erkannt und vermessen werden kann. Nachdem der Anschlag 26 in seine Grundposition gebracht wurde, wird das Werkzeug 22 in die Aufnahmebohrung 20 eingebracht. Das Einbringen kann manuell oder automatisch durch das Greifelement 14 geschehen. Das Werkzeug 22 kommt mit seinem unteren Schaftende auf der Spitze 32 des Anschlags 26 zu liegen. Anschließend wird eine Kante einer als charakteristisches Element des Werkzeugs 22 dienende Schneide 36 durch die Vermessungsoptik 2 auf ihre Position hin vermessen. Hierbei wird der Abstand Zᵢₛₜ der Kante bzw. der Schneide 36 vom Bezugspunkt 34 ermittelt, indem die Vermessungsoptik 2 auf die Schneide 36 fokussiert wird und die Position der Schneide 36 mit der gespeicherten Position des Bezugspunkts 34 verglichen wird. Der Abstand Zᵢₛₜ wird dann verglichen mit dem Abstand Zₛₒₗₗ, mit dem die Schneide 36 vom Bezugspunkt 34 beabstandet sein muss, um in der axialen Sollposition positioniert zu sein. Die Messwerte der Vermessungsoptik 2 werden im Datenverarbeitungssystem 16 ausgewertet, in dem auch die Differenz zwischen den Abständen Zᵢₛₜ und Zₛₒₗₗ berechnet wird. Die Differenz zwischen den Abständen ist die Positionierstrecke Z₁.

Nun wird der Nachstellantrieb 30 der Nachstelleinheit 28 durch das Datenverarbeitungssystem 16 so angesteuert, dass der Anschlag 26 durch den Nachstellantrieb 30 um die Positionierstrecke Z₁ nach oben verfahren wird. Hierbei wird das Werkzeug 18 durch die Bewegung des Anschlags 26 aus dem Werkzeugfutter 18 etwas herausbewegt. Die Kante der Schneide 36 bewegt sich vom Punkt P₀ zum Punkt P₁. Das Werkzeug 18 ist nun in seiner Sollposition im Werkzeugfutter positioniert und kann dort fixiert werden. Die Fixierung erfolgt mit Hilfe einer Klemmschraube 38, die im Werkzeugfutter 18 angeordnet ist. Durch das Drehen an der Klemmschraube 38 wird das Werkzeug 22 in der Aufnahmebohrung 20 eingeklemmt.

Die Sollposition bzw. der Abstand Zₛₒₗₗ kann nun durch einen automatischen oder manuellen Messablauf mit der Vermessungsoptik 2 überprüft werden. Ist der Abstand der Schneide 36 vom Bezugspunkt 34 außerhalb eines festgelegten Toleranzbands um Zₛₒₗₗ, kann der Einstellvorgang wiederholt werden, indem die Klemmschraube 38 noch einmal gelöst wird und der Einstellvorgang erneut gestartet wird.

In der Aufnahmebohrung 20 ist eine Stützeinrichtung 40 in Form eines Innengewindes eingebracht. An diesem Innengewinde ist ein Halteanschlag 42 abgestützt, der mit seinem Außengewinde 44 im Innengewinde eingeschraubt ist. Der Übersichtlichkeit halber ist der Halteanschlag 42 in Figur 2 nicht in die Aufnahmebohrung 20 hineingezeichnet, sondern außerhalb des Werkzeugfutters 18 dargestellt. In den Anschlag 42 ist ein Kanal 46 eingearbeitet, durch den der Anschlag 26 hindurchgeführt ist. Der Kanal 46 weist zumindest an seinem unteren Ende einen hexagonalen Querschnitt auf, in den ein Verstellwerkzeug 48 einbringbar ist. Das Verstellwerkzeug 48 ist über einen Teil der Länge des Anschlags 26 um den Anschlag 26 herum angeordnet und ist durch einen Verstellantrieb 50 sowohl auf und ab verfahrbar als auch um die Längsachse drehbar. Die Spitze 52 des Verstellwerkzeugs 48 ist ebenso wie der untere Teil des Kanals 46 hexagonal ausgestaltet, und zwar so, dass die Spitze 52 in den Kanal 46 eingreifen kann. Nachdem das Werkzeug 22 in seiner Sollposition fixiert wurde, wird das Verstellwerkzeug 48 mit Hilfe des Verstellantriebs 50 so verfahren und gedreht, dass der Halteanschlag 42 nach oben geschraubt wird, so lange bis die obere Fläche 54 das untere Ende des Schafts des Werkzeugs 22 berührt. Die Berührung kann durch einen in Figur 2 nicht gezeigten Sensor festgestellt werden. Der Halteanschlag 42 bietet dem Werkzeug 22 einen besonders guten Halt gegen ungewolltes Hineinrutschen in die Aufnahmebohrung 20 bei einer während eines Bearbeitungsvorgangs sehr heftigen Belastung. Ebenso gut ist es möglich, den Halteanschlag 42 manuell mit Hilfe eines Inbusschlüssels in Anlage mit dem unteren Ende des Werkzeugschafts zu bringen.

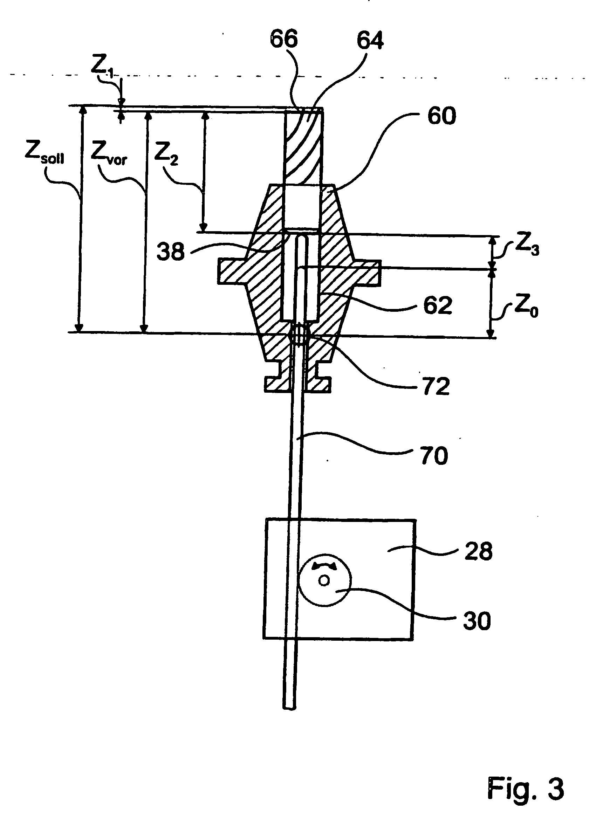

Figur 3 zeigt ein Werkzeugfutter 60, das als ein Schrumpffutter ausgestaltet ist. Ebenso wie das Werkzeugfutter 18 aus Figur 2 ist auch das Werkzeugfutter 60 dazu ausgelegt, in der Werkzeugfutteraufnahme 6 eingesetzt und gegebenenfalls eingespannt zu werden. Das Werkzeugfutter 60 weist eine Aufnahmebohrung 62, zur Aufnahme eines Werkzeugs 64 auf. Zum Befestigen des Werkzeugs 64 im Werkzeugfutter 60 wird das Werkzeug 64 in einer in den Figuren nicht gezeigten Vermessungseinrichtung auf seine Länge Z₂ vermessen. Die Längenvermessung kann durch die Vermessungsoptik 2 oder durch eine andere Vermessungsoptik geschehen. Hierbei kann das Werkzeug 64 mit seinem Schaftende auf einen Vermessungsanschlag mit einer Anschlagspitze gestellt werden, deren Position bekannt ist. Dann wird der Abstand einer Schneide 66 von der Position der Anschlagspitze gemessen. Mit Hilfe der aus der Messung erhaltenen Länge Z₂ wird eine Vorpositionierungsstrecke Z₃ berechnet, um die ein Anschlag 70 von einer Grundposition, die im Abstand Z₀ von einem Bezugspunkt 72 ist, nach oben gefahren wird. Zum Befestigen des Werkzeugs 64 im Werkzeugfutter 60 wird das Werkzeugfutter 60 nun mit Hilfe der Heizeinrichtung 12 des Werkzeugeinstell- und Messgeräts erhitzt. Hierbei weitet sich die Aufnahmebohrung 62, so dass das kühle Werkzeug 64 mit seinem Schaft in die Aufnahmebohrung 62 eingebracht und mit dem Anschlag 70 in Anschlag gebracht werden kann. Anschließend wird das Werkzeugfutter 60 abgekühlt, zieht sich zusammen und spannt den Schaft des Werkzeugs 64 kraftschlüssig ein. Die Schneide 66 befindet sich nun in einer Vorposition, die mit dem Abstand Zᵥₒᵣ vom Bezugspunkt 72 beabstandet ist. Diese Vorposition sollte theoretisch zwar der Sollposition entsprechen, kann jedoch aufgrund von Ungenauigkeiten im Bereich von einigen 0,01 mm neben der Sollposition liegen.

Nachdem das Werkzeug 64 im Werkzeugfutter eingeschrumpft ist, wird die Position der als charakteristisches Element dienenden Schneide 66 mit Hilfe der Vermessungsoptik 2 vermessen. Hierbei wird der Abstand der Vorposition von der Sollposition der Schneide 66 erkannt. Diese Differenz entspricht der Positionierstrecke Z₁, die im Datenverarbeitungssystem 16 gespeichert wird. Nun wird die Heizeinrichtung 12 nochmals um das Werkzeugfutter 60 herumgelegt, und das Werkzeugfutter 60 wird erwärmt. Die Aufnahmebohrung 62 dehnt sich aus und das Werkzeug 64 wird wieder gelockert. Nachdem die Temperatur des Werkzeugfutters 60 eine Solltemperatur erreicht hat, wird der Anschlag 70 um die Positionierstrecke Z₁ verfahren, so dass das Werkzeug 64 seine Sollposition erreicht, bei dem die Schneide 66 mit dem Abstand Zₛₒₗₗ vom Bezugspunkt 72 beabstandet ist. Die Schneide 66 ist nun mit einer Genauigkeit von einem oder mehreren µm in der Sollposition positioniert. Nach einem Abkühlen des Werkzeugfutters 60 ist das Werkzeug 64 mit einer sehr hohen Genauigkeit in der Aufnahmebohrung 62 in Sollposition fixiert.

Etwas aufwändiger, dafür aber schneller kann das Werkzeug 64 auch ohne eine Vorpositionierung in Sollposition im Werkzeugfutter 60 befestigt werden. Hierfür wird das Werkzeug 64, nachdem es auf seine Länge Z₂ vermessen wurde und bevor es in die Aufnahmebohrung 62 des Werkzeugfutters 60 eingebracht wird, ein Stück weit oberhalb des Werkzeugfutters 60 vom Greifelement 14 gehalten. Das Werkzeug 64 wird nun so lange gedreht, bis das charakteristische Element, also die Schneide 66 oder eine Kante der Schneide 66, gut im Blickfeld der Vermessungsoptik 2 angeordnet ist, so dass die Vermessungsoptik 2 auf die Schneide 66 bzw. die Kante fokussieren kann. Nachdem die Fokussierung erfolgreich beendet wurde, wird das Werkzeug 64 vom Greifelement 14 in die Aufnahmebohrung 62 des erhitzten Werkzeugfutters 60 eingebracht. Hierbei wird das Werkzeug 64 in der Weise bewegt, dass die Vermessungsoptik 2 synchron mit dem Werkzeug 64 mitgeführt wird und auf die Schneide 66 bzw. Kante fokussiert bleibt. Das Anschlagen des Werkzeugs 64 auf der Spitze des auf die Länge des Werkzeugs 64 vorpositionierten Anschlags 70 kann dadurch registriert werden, dass die im Blickfeld der Vermessungsoptik 2 angeordnete Schneide 66 relativ zum Blickfeldmittelpunkt leicht bewegt wird, weil das Werkzeug 64 beim Anschlag 70 stoppt, wohingegen die Vermessungsoptik 2 noch ein kleines Stück weiter nach unten verfährt. Diese Bewegungsdifferenz wird durch das Datenverarbeitungssystem 16 registriert, und es wird die exakte Positionsbestimmung der Schneide 66 getriggert, aus deren Messergebnis der Abstand Z₁ zur Korrektur der Vorposition in die Sollposition ermittelt wird. Entsprechend wird dann der Anschlag 70 bewegt und das Werkzeug mit sehr hoher Genauigkeit in die Sollposition gebracht.

Nachdem das Werkzeug 22, 64 - - in Sollposition im Werkzeugfutter 18, 60 eingeschrumpft wurde, wird das Werkzeugfutter 18, 60 mit dem Werkzeug 22, 64 einer Kühleinrichtung zugeführt, die das Werkzeugfutter 18, 60 abkühlt. Anschließend wird das Werkzeug 22, 64 einem Bearbeitungsgerät, beispielsweise einer CNC-Werkzeugmaschine, zugeführt. Sollte das Werkzeug 22, 64 während des Bearbeitungsvorgangs abbrechen, kann es vorkommen, dass das Werkzeug 22, 64 nicht mehr vom Greifelement 14 der Werkzeugeinstell- und Messvorrichtung gegriffen werden kann. Zum Entfernen des Werkzeugs 22, 64 aus der Aufnahmebohrung 20, 62 wird das Werkzeugfutter 18, 60 durch die Heizeinrichtung 12 erhitzt, wodurch die Fixierung des Werkzeugs 22, 64 im Werkzeugfutter 18, 60 gelöst wird. Das Datenverarbeitungssystem 16 steuert nun den Nachstellantrieb 30 der Nachstelleinheit 28 in der Weise, dass der Anschlag 42, 70 bis zu einer vorbestimmten Position des Anschlags 42, 70 verfahren wird. Die vorbestimmte Position des Anschlags 42, 70 ist so gewählt, dass das abgebrochene Werkzeug 22, 64 in ausreichendem Maße aus dem Werkzeugfutter 18, 60 herausragt, so dass es vom Greifelement 14 gegriffen oder ohne Mühe von Hand aus dem Werkzeugfutter 18, 60 herausgenommen werden kann. Zusätzlich verbleibt das Werkzeug 22, 64 noch in genügendem Maße in der Aufnahmebohrung 20, 62, so dass es nicht aus der Aufnahmebohrung 20, 62 herausfällt.

### Bezugszeichen

- 2: Vermessungsoptik
- 4: Richtung
- 6: Werkzeugfutteraufnahme
- 8: Werkzeugfutter
- 10: Werkzeug
- 12: Heizeinrichtung
- 14: Greifelement
- 16: Datenverarbeitungssystem
- 18: Werkzeugfutter
- 20: Aufnahmebohrung
- 22: Werkzeug
- 24: Anschlagbohrung
- 26: Anschlag
- 28: Nachstelleinheit
- 30: Nachstellantrieb
- 32: Spitze
- 34: Bezugspunkt
- 36: Schneide
- 38: Klemmschraube
- 40: Stützeinrichtung
- 42: Anschlag
- 44: Außengewinde
- 46: Kanal
- 48: Verstellwerkzeug
- 50: Verstellantrieb
- 52: Spitze
- 54: Fläche
- 60: Werkzeugfutter
- 62: Aufnahmebohrung
- 64: Werkzeug
- 66: Schneide
- 68: Schaftende
- 70: Anschlag
- 72: Bezugspunkt

- Z₀: Abstand
- Z₁: Positionierstrecke
- Z₂: Länge
- Z₃: Vorpositionierungsstrecke
- Zᵢₛₜ: Abstand
- Zₛₒₗₗ: Abstand
- Zᵥₒᵣ: Abstand
- P₀: Punkt
- P₁: Punkt

## Patentansprüche

1. Verfahren zum Befestigen eines Werkzeugs (10, 22, 64) mit einem Schaft in einem Werkzeugfutter (8, 18, 60), bei dem das Werkzeug (10, 22, 64) in das Werkzeugfutter (8, 18, 60) eingeführt und bei Erreichen einer axialen Sollposition im Werkzeugfutter (8, 18, 60) fixiert wird, wobei das Werkzeug (10, 22, 64) mit seinem Schaft an einen Anschlag (26, 70) gebracht wird,
wobei ein charakteristisches Element des Werkzeugs (10, 22, 64) auf seine Position hin vermessen wird und die Positionierung des Werkzeugs (10, 22, 64) auf die axiale Sollposition durch eine Bewegung des Anschlags (26, 70) um eine aus der Messung errechnete Positionierstrecke (Z₁) durchgeführt wird,
**dadurch gekennzeichnet, dass**
das Werkzeug (10, 64) vor dem Einführen vor eine Vermessungsoptik (2) gebracht und die Vermessungsoptik (2) auf das charakteristische Element fokussiert wird und die Vermessungsoptik (2) während des Einführens auf das charakteristische Element fokussiert bleibt.

2. Verfahren nach Anspruch 1,
**dadurch gekennzeichnet,**
**dass** das Werkzeug (10, 22, 64) nach dem Einführen an den Anschlag (26, 70) gebracht wird.

3. Verfahren nach Anspruch 1 oder 2,
**dadurch gekennzeichnet,**
**dass** das Werkzeug (10, 22, 64) durch die Bewegung des Anschlags (26, 70) aus dem Werkzeugfutter (8, 18, 60) heraus bewegt wird.

4. Verfahren nach einem der vorhergehenden Ansprüche,
**dadurch gekennzeichnet,**
**dass** der Ist-Abstand (Zᵢₛₜ) des charakteristischen Elements von einem Bezugspunkt bestimmt und die Positionierstrecke (Z₁) aus der Differenz zwischen dem Ist-Abstand (Zᵢₛₜ) und einem Soll-Abstand (Zₛₒₗₗ) berechnet wird.

5. Verfahren nach einem der vorhergehenden Ansprüche,
**dadurch gekennzeichnet,**
**dass** eine Schneide (36, 66) des Werkzeugs (10, 22, 64) als charakteristisches Element verwendet wird.

6. Verfahren nach einem der vorhergehenden Ansprüche,
**dadurch gekennzeichnet,**
**dass** ein im Werkzeugfutter (8, 18) abgestützter Halteanschlag (42) an das in Sollposition gebrachte Werkzeug (10, 22) in Anschlag gebracht wird.

7. Verfahren nach einem der vorhergehenden Ansprüche,
**dadurch gekennzeichnet,**
**dass** das Werkzeug (10, 64) nach Erreichen der Sollposition im Werkzeugfutter (8, 60) eingeschrumpft wird.

8. Verfahren nach einem der vorhergehenden Ansprüche,
**dadurch gekennzeichnet,**
**dass** das Werkzeug (10, 64) eingeführt, vorpositioniert und in das Werkzeugfutter (8, 60) eingeschrumpft wird und vor der Bewegung des Anschlags (26, 70) um die Positionierstrecke (Z₁) wieder gelockert wird.

9. Verfahren nach Anspruch 8,
**dadurch gekennzeichnet,**
**dass** vor dem Einführen das charakteristische Element des Werkzeugs (10, 22, 64) auf seine Position relativ zu einem Anschlagspunkt am Werkzeug (10, 22, 64) vermessen wird und der Anschlag (26, 70) um eine aus der Messung errechnete Vorpositionierungsstrecke (Z₃) verfahren wird bevor das Werkzeug (10, 22, 64) in Anschlag gebracht wird.

10. Verfahren nach Anspruch 1,
**dadurch gekennzeichnet,**
**dass** das Werkzeug (10, 64) in der Weise bewegt wird, dass die Vermessungsoptik (2) auf das charakteristische Element fokussieren kann.

11. Verfahren nach einem der vorhergehenden Ansprüche,
**dadurch gekennzeichnet,**
**dass** ein Anschlagen des Werkzeugs (10, 22, 64) am Anschlag (26, 70) durch ein Datenverarbeitungssystem (16) registriert und darauf die Positionsbestimmung des charakteristischen Elements getriggert wird.

12. Verfahren nach Anspruch 11,
**dadurch gekennzeichnet,**
**dass** die Registrierung mit Hilfe der Vermessungsoptik (2) erfolgt.

13. Verfahren nach einem der vorhergehenden Ansprüche,
**dadurch gekennzeichnet,**
**dass** die Fixierung des Werkzeugs (10, 22, 64) im Werkzeugfutter (8, 18, 60) gelöst wird und der Anschlag (26, 70) das Werkzeug (10, 22, 64) in Richtung aus dem Werkzeugfutter (8, 18, 60) heraus bewegt.

14. Verfahren nach Anspruch 13,
**dadurch gekennzeichnet,**
**dass** das Werkzeug (10, 22, 64) bis zu einer vorbestimmten Position des Anschlags (26, 70) aus dem Werkzeugfutter (8, 18, 60) heraus bewegt.

## Claims

1. Method for fixing a tool (10, 22, 64) having a shank in a tool chuck (8, 18, 60), in which the tool (10, 22, 64) is inserted into the tool chuck (8, 18, 60) and is fixed in the tool chuck (8, 18, 60) when an axial desired position is reached, wherein the tool (10, 22, 64) is brought with its shank against a stop (26, 70), wherein a characteristic element of the tool (10, 22, 64) is measured for its position, and the tool (10, 22, 64) is positioned in the axial desired position by a movement of the stop (26, 70) by a positioning distance (Z₁) calculated from the measurement, **characterized in that** the tool (10, 64) is brought in front of an optical measuring system (2) before the insertion, and the optical measuring system (2) is focussed on the characteristic element, and the optical measuring system (2) remains focussed on the characteristic element during the insertion.

2. Method according to claim 1, **characterized in that** the tool (10, 22, 64) is brought against the stop (26, 70) after the insertion.

3. Method according to claim 1 or 2, **characterized in that** the tool (10, 22, 64) is moved out of the tool chuck (8, 18, 60) by the movement of the stop (26, 70).

4. Method according to one of the preceding claims, **characterized in that** the actual distance (Z_{actual}) of the characteristic element from a reference point is determined, and the positioning distance (Z₁) is calculated from the difference between the actual distance (Z_{actual}) and a desired distance (Z_{desired}).

5. Method according to one of the preceding claims, **characterized in that** a cutting lip (36, 66) of the tool (10, 22, 64) is used as characteristic element.

6. Method according to one of the preceding claims, **characterized in that** a retaining stop (42) supported in the tool chuck (8, 18) is brought against the tool (10, 22) brought into the desired position.

7. Method according to one of the preceding claims, **characterized in that** the tool (10, 64) is shrunk in place in the tool chuck (8, 60) after reaching the desired position.

8. Method according to one of the preceding claims, **characterized in that** the tool (10, 64) is inserted, pre-positioned and shrunk in place in the tool chuck (8, 60) and is loosened again before the movement of the stop (26, 70) by the positioning distance (Z₁).

9. Method according to claim 8, **characterized in that**, before the insertion, the characteristic element of the tool (10, 22, 64) is measured for its position relative to a stop point at the tool (10, 22, 64), and the stop (26, 70) is moved by a positioning distance (Z₃), calculated from the measurement, before the tool (10, 22, 64) is brought against the stop.

10. Method according to claim 1, **characterized in that** the tool (10, 64) is moved in such a way that the optical measuring system (2) can be focussed on the characteristic element.

11. Method according to one of the preceding claims, **characterized in that** striking of the tool (10, 22, 64) against the stop (26, 70) is recorded by a data processing system (16), and after that the determination of the position of the characteristic element is triggered.

12. Method according to Claim 11, **characterized in that** the recording is effected by means of the optical measuring system (2).

13. Method according to one of the preceding claims, **characterized in that** the fixing of the tool (10, 22, 64) in the tool chuck (8, 18, 60) is released, and the stop (26, 70) moves the tool (10, 22, 64) out of the tool chuck (8, 18, 60).

14. Method according to claim 13, **characterized in that** the tool (10, 22, 64) is moved out of the tool chuck (8, 18, 60) up to a predetermined position of the stop (26, 70).

## Revendications

1. Procédé pour la fixation d'un outil (10, 22, 64) avec une tige dans un mandrin d'outil (8, 18, 60), dans lequel l'outil (10, 22, 64) est introduit dans le mandrin d'outil (8, 18, 60) et est fixé dans le mandrin d'outil (8, 18, 60) une fois qu'il a atteint une position de consigne axiale, l'outil (10, 22, 64) étant amené avec sa tige contre une butée (26, 70), un élément caractéristique de l'outil (10, 22, 64) étant mesuré en termes de sa position et le positionnement de l'outil (10, 22, 64) étant réalisé dans sa position axiale par un déplacement de la butée (26, 70) d'une distance de positionnement (Z₁) calculée à partir de la mesure,
**caractérisé en ce que**
l'outil (10, 64) est amené avant l'introduction devant une optique de mesure (2) et l'optique de mesure (2) est focalisée sur l'élément caractéristique, et l'optique de mesure (2) reste focalisée pendant l'introduction sur l'élément caractéristique.

2. Procédé selon la revendication 1,
**caractérisé en ce que**
l'outil (10, 22, 64) est amené contre la butée (26, 70) après son introduction.

3. Procédé selon la revendication 1 ou 2,
**caractérisé en ce que**
l'outil (10, 22, 64) est ressorti du mandrin d'outil (8, 18, 60) par déplacement de la butée (26, 70).

4. Procédé selon l'une quelconque des revendications précédentes,
**caractérisé en ce que**
la distance réelle (Zᵢₛₜ) de l'élément caractéristique à un point de référence est déterminée et la distance de positionnement (Z₁) est calculée à partir de la différence entre la distance réelle (Zᵢₛₜ) et une distance de consigne (Zₛₒₗₗ).

5. Procédé selon l'une quelconque des revendications précédentes,
**caractérisé en ce que**
l'on utilise une arête de coupe (36, 66) de l'outil (10, 22, 64) comme élément caractéristique.

6. Procédé selon l'une quelconque des revendications précédentes,
**caractérisé en ce**
**qu'**une butée de retenue (42) supportée dans le mandrin d'outil (8, 18) est amenée en butée contre l'outil (10, 22) amené dans la position de consigne.

7. Procédé selon l'une quelconque des revendications précédentes,
**caractérisé en ce que**
l'outil (10, 64) est comprimé dans le mandrin d'outil (8, 60) après avoir atteint la position de consigne.

8. Procédé selon l'une quelconque des revendications précédentes,
**caractérisé en ce que**
l'outil (10, 64) est introduit, prépositionné et comprimé dans le mandrin d'outil (8, 60) et est à nouveau desserré avant le déplacement de la butée (26, 70) de la distance de positionnement (Z₁).

9. Procédé selon la revendication 8,
**caractérisé en ce que**
avant l'introduction, l'élément caractéristique de l'outil (10, 22, 64) est mesuré en termes de sa position par rapport à un point de butée sur l'outil (10, 22, 64) et la butée (26, 70) est déplacée d'une distance de prépositionnement (Z₃) calculée à partir de la mesure, avant que l'outil (10, 22, 64) ne soit amené en butée.

10. Procédé selon la revendication 1,
**caractérisé en ce que**
l'outil (10, 64) est déplacé de telle manière que l'optique de mesure (2) puisse focaliser sur l'élément caractéristique.

11. Procédé selon l'une quelconque des revendications précédentes,
**caractérisé en ce que**
l'on enregistre une venue en butée de l'outil (10, 22, 64) contre la butée (26, 70) par un système de traitement des données (16) et l'on déclenche ensuite la détermination de la position de l'élément caractéristique.

12. Procédé selon la revendication 11,
**caractérisé en ce que**
l'enregistrement s'effectue à l'aide de l'optique de mesure (2).

13. Procédé selon l'une quelconque des revendications précédentes,
**caractérisé en ce que**
la fixation de l'outil (10, 22, 64) dans le mandrin d'outil (8, 18, 60) est desserrée et la butée (26, 70) déplace l'outil (10, 22, 64) de manière à le faire ressortir du mandrin d'outil (8, 18, 60).

14. Procédé selon la revendication 13,
**caractérisé en ce que**
l'outil (10, 22, 64) est ressorti jusqu'à une position prédéterminée de la butée (26, 70) hors du mandrin d'outil (8, 18, 60).
